## Europäisches Patentamt
## European Patent Office
## Office européen des brevets

(19)

(11) Veröffentlichungsnummer: **0 245 587**
**B1**

(12)
# EUROPÄISCHE PATENTSCHRIFT

(45) Veröffentlichungstag der Patentschrift:
**02.11.89**

(51) Int. Cl.⁴: **G01G 7/04**, G01G 23/48

(21) Anmeldenummer: **87101958.4**

(22) Anmeldetag: **12.02.87**

(54) **Elektromagnetisch kraftkompensierende Waage.**

(30) Priorität: **18.04.86 CH 1569/86**

(43) Veröffentlichungstag der Anmeldung:
**19.11.87 Patentblatt 87/47**

(45) Bekanntmachung des Hinweises auf die Patenterteilung:
**02.11.89 Patentblatt 89/44**

(84) Benannte Vertragsstaaten:
**DE FR GB**

(56) Entgegenhaltungen:
**DE-A- 2 400 881**
**DE-A- 3 136 171**
**FR-A- 2 394 787**
**GB-A- 2 114 754**

(73) Patentinhaber: **Mettler Instrumente AG, Im Langacher, CH-8606 Greifensee(CH)**

(72) Erfinder: **Reichmuth, Arthur, Im Neuguet 6, CH-8620 Wetzikon(CH)**

ACTORUM AG

## Beschreibung

Die Erfindung betrifft eine elektromagnetisch kraftkompensierende Waage, mit einer im Luftspalt eines Permanentmagnetsystems angeordneten Spule, die wenigstens eine von einem lastabhängigen Kompensationsstrom durchflossene Lastwicklung aufweist, und mit einem Temperaturfühler zur Messung der Spulentemperatur als Steuergrösse für die Kompensation ihres Einflusses auf die Messanzeige.

Waagen mit elektromagnetischer Kraftkompensation haben den Nachteil, dass entsprechend dem jeweils fliessenden Kompensationsstrom die Verlustleistung (Wärmeleistung) der Lastwicklung lastabhängig ist. Beim aufeinanderfolgenden Wägen unterschiedlicher Lasten wird also auch stets unterschiedlich viel Verlustwärme frei, die bekanntlich proportional zum Quadrat des Stromes ist. Als eine Folge der somit ständig wechselnden Temperaturen im System tritt eine unerwünschte Instabilität des Nullpunktes sowie gegebenenfalls der Empfindlichkeit auf. Besonders störend wird dieser Effekt, wenn Waagen kompakter Bauart, unter anderem mit maximaler Ausnützung des Permanentmagnetsystems, eine grössere Auflösung erhalten sollen. Weisen die Waagen eine Hebelübersetzung auf, so treten Temperaturdifferenzen am Hebel auf, welche die Empfindlichkeit beeinflussen. Die Einflüsse unterschiedlicher Temperaturen auf das Permanentmagnetsystem können zwar mittels entsprechend plazierter Temperaturfühler reduziert werden (DE-OS 33 24 402), jedoch bleiben auch hier aufgrund der Temperaturdynamik (Wärmeträgheit des Magnetsystems) Fehlereinflüsse bestehen.

Der beschriebene Nachteil ist verbunden mit der Schwierigkeit, alle zur Instabilität der Anzeige beitragenden Störgrössen genau zu erfassen. Der dazu erforderliche Aufwand ist in der Regel nur bei sehr hoch auflösenden Waagen gerechtfertigt. In diesem Zusammenhang ist es unerlässlich, unter anderem die Temperatur in der Lastwicklung als Mass für deren Verlustleistung genau und echtzeitmässig zu bestimmen, um eine über einen grösseren Temperaturbereich wirksame Kompensation des lastabhängigen Temperatureinflusses auf das Messresultat zu erzielen. Andererseits haben Versuche gezeigt, dass die lastabhängigen Anzeigefehler in guter Annäherung zur Verlustleistung in der Lastwicklung proportional sind. Aufgrund dieser Erkenntnis kann also auch mit geringerem Aufwand eine wirksame Temperaturkompensation für hoch auflösende Waagen erreicht werden. Voraussetzung dafür ist aber wiederum eine möglichst genaue Erfassung der Temperatur in der Lastwicklung.

Zu diesem Zweck hat man vorgeschlagen, an der Aussenseite der Lastwicklung einen Temperaturfühler anzubringen (DE-OS 33 40 512). Nachteilig an Lösungen dieser Art ist der Umstand, dass der Temperaturfühler nicht im Zentrum der Wärmequelle oder dazu nahe genug angeordnet werden kann. Dies hat zur Folge, dass der gemessene Temperaturverlauf dem wirklichen nur ungenau zu folgen vermag.

Der vorliegenden Erfindung lag die Aufgabe zugrunde, die Temperatur im Zentrum der Wärmequelle, also in der Lastwicklung zu messen.

Die Lösung dieser Aufgabe besteht erfindungsgemäss darin, das eine Wicklung der Spule als Temperaturfühler dient und mit einer Einrichtung zur Messung ihres temperaturabhängigen Widerstandes aus Spannung und Strom verbunden ist.

Vorzugsweise dient als Temperaturfühler die vom Kompensationsstrom durchflossene Lastwicklung. Es besteht aber auch die Möglichkeit, dass die Spule eine als Temperaturfühler dienende Zusatzwicklung aufweist, welche mit der Lastwicklung unmittelbar in thermischem Kontakt steht.

Durch die Benützung einer Wicklung der im Luftspalt des Permanentmagnetsystems angeordneten Spule als Temperaturfühler ist eine genaue und echtzeitmässige Erfassung der Wicklungstemperatur gewährleistet. Letztere steht bei temperaturkonstantem Temperaturkoeffizienten des Wicklungsmaterials zum Wicklungswiderstand in einem linearen Verhältnis.

Die Auswertung des gemessenen Widerstandswertes ist nicht Gegenstand der Erfindung. Sie kann in gleicher oder ähnlicher Weise wie bei bekannten Korrekturnetzwerken mit anderen Temperaturfühlern erfolgen.

Es ist zwar zum Zwecke der Temperaturkompensation mit geringeren Genauigkeitsansprüchen bekannt, eine Zusatzwicklung auf dem stationären Permanentmagnetsystem oder auf der im Luftspalt desselben beweglichen Spule anzuordnen. Diese Zusatzwicklung ist jedoch nicht als Temperaturfühler zur genauen Erfassung der Wicklungstemperatur vorgesehen, sondern dient z.B. als temperaturabhängiger, nichtlinearer Widerstand in einem Korrekturnetzwerk (DE-PS 24 00 881) oder als regelbare Heizwicklung zur Konstanthaltung der in der Spule insgesamt erzeugten elektrischen Verlustleistung (DE-OS 28 19 451).

In der Zeichnung sind Ausführungsbeispiele der Erfindung dargestellt, und zwar zeigen:

Fig. 1 eine schematische Darstellung einer elektromagnetisch kraftkompensierenden Waage,

Fig. 2 einen Querschnitt der im Luftspalt des Permanentmagnetsystems angeordneten Spule mit einer als Temperaturfühler dienenden Zusatzwicklung,

Fig. 3 bis 5 verschiedene Schaltungsanordnungen zur Messung des Widerstandes der Lastwicklung,

Fig. 6 eine Schaltungsanordnung zur Messung des Widerstandes einer Zusatzwicklung mit Wechselstrom, und

Fig. 7 und 8 schematisch zwei Ausführungsformen der Zusatzwicklung.

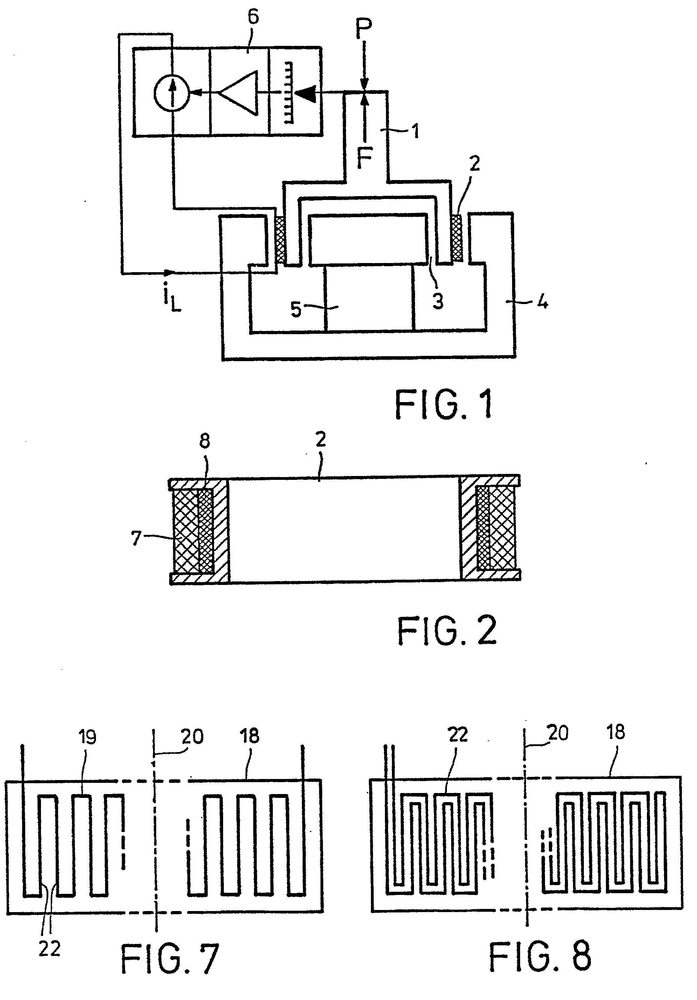

Gemäss Fig. 1 besitzt die Waage einen Lastaufnehmer 1, auf den die Kraft P einwirkt, welche dem Gewicht des Wägegutes entspricht. Der Lastaufnehmer 1 trägt eine Spule 2, die im Luftspalt 3 eines Permanentmagnetsystems 4 mit dem Permanentmagneten 5 angeordnet ist. Durch die Lastwicklung der Spule 2 fliesst ein Kompensationsstrom $i_L$, der im Magnetfeld des Permanentmagnetsystems 4 eine Kraft F erzeugt, welche der Kraft P entgegenwirkt. Durch eine Regeleinrichtung 6, welche die Position des Lastaufnehmers 1 erfasst, wird der Kompensationsstrom $i_L$ so geregelt, dass die diesem proportionale Kraft F die Waage im Gleichgewicht hält und die Stärke des Kompensationsstromes $i_L$ somit ein Mass für die Kraft P bzw. für das Gewicht des Wägegutes darstellt.

Eine Lösungsvariante zur Erfassung der Spulentemperatur besteht gemäss Fig. 2 darin, auf die Spule 2 ausser der Lastwicklung 7 eine als Temperaturfühler dienende Zusatzwicklung 8 aufzubringen, beispielsweise innerhalb der Lastwicklung 7. Die Zusatzwicklung 8 kann innerhalb des Wickelraumes beliebig plaziert werden; wesentlich ist, dass sie mit der Lastwicklung 7 unmittelbar in thermischem Kontakt steht. Ferner soll die Zusatzwicklung 8 möglichst wenig vom vorhandenen Wickelraum in Anspruch nehmen und daher vorzugsweise nur aus einer Wickellage bestehen, damit der grösste Teil des Wickelraumes für die Lastwicklung zur Verfügung steht. Für die Zusatzwicklung kann Wicklungsdraht aus Kupfer oder aus einem anderen elektrisch leitenden, jedoch möglichst nicht ferromagnetischen Material mit einem ausreichenden, vorzugsweise hohen Temperaturkoeffizienten verwendet werden.

Bei der Messung des Widerstandes $R_Z$ der Zusatzwicklung 8 aus Spannung und Strom ist darauf zu achten, dass durch den Strom in der Zusatzwicklung keine zusätzliche Kraft erzeugt wird, welche die Kraftkompensation beeinflussen und damit das Messresultat verfälschen würde. Ein solcher Fehler lässt sich vermeiden, wenn entweder die Zusatzwicklung als Bifilarwicklung oder als Mäanderwicklung ausgeführt und/oder die Widerstandsmessung mit Wechselstrom durchgeführt wird.

Die Fig. 7 und 8 zeigen zwei Ausführungsformen einer Mäanderwicklung in abgewickelter Darstellung. In beiden Fällen besteht die Mäanderwicklung aus einer z.B. gedruckten Leiterbahn auf einer bandförmigen Trägerfolie 18 aus nichtleitendem Material, die auf den Spulenkörper gewickelt wird. Gemäss Fig. 7 ist die mäanderförmige, unifilare Leiterbahn 19 so angeordnet, dass die längeren Abschnitte 21 der Leiterbahn parallel zur Spulenachse 20 verlaufen und somit bei Stromdurchfluss keine die Kraftmessung beeinflussende Kraftkomponente in Richtung der Spulenachse erzeugen. In gleicher Weise ist die Leiterbahn 22 nach Fig. 8 angeordnet, welche eine bifilare Mäanderwicklung darstellt.

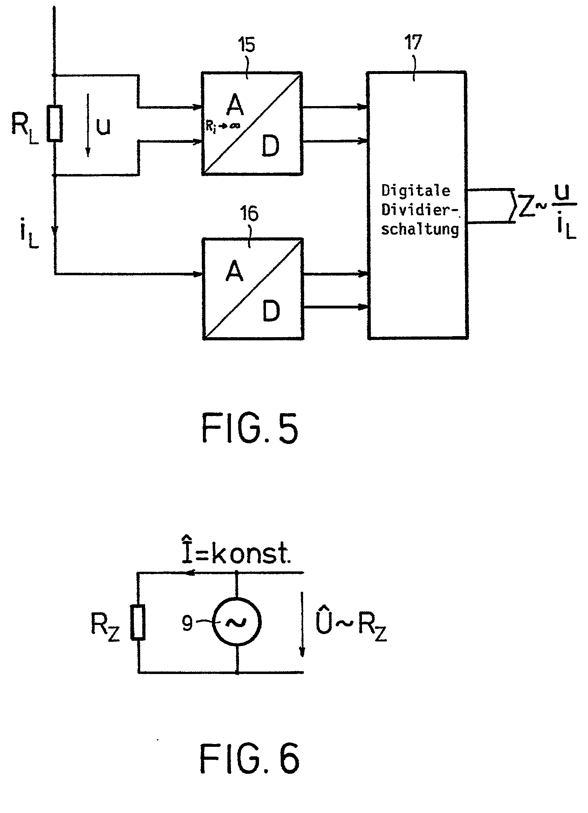

Die Fig. 6 zeigt eine einfache Einrichtung zur Messung des Widerstandes $R_Z$ der Zusatzwicklung 8. Sie weist eine Wechselstrom quelle 9 auf, welche einen sinusförmigen Strom mit konstantem Maximalwert $\hat{I}$ liefert, so dass die Spannung $\hat{U}$ dem Widerstand $R_Z$ proportional ist und ein direktes Mass für die Spulentemperatur darstellt. Der Messstrom kann auch rechteckförmig sein oder eine beliebige andere Form haben; sein Mittelwert darf aber nicht von Null abweichen.

Eine bevorzugte Ausführungsform des Erfindungsgegenstandes besteht darin, dass die vom Kompensationsstrom durchflossene Lastwicklung zugleich als Temperaturfühler dient. Diese Lösungsvariante hat die Vorteile, dass keine thermischen Kontaktstellen mehr vorhanden sind, dass also die Erwärmung in derselben Wicklung erfasst wird, in der sie entsteht, dass keine weiteren beweglichen, kraftfreien Stromzuführungen zur Spule nötig sind und dass der ganze Wickelraum für die Lastwicklung zur Verfügung steht.

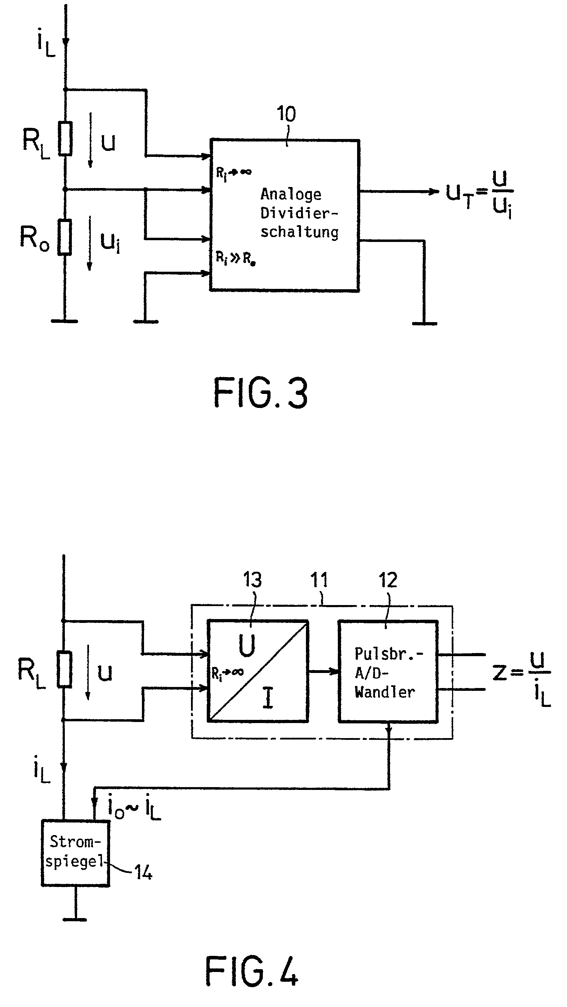

Die Messung des temperaturabhängigen Widerstandes $R_L$ der Lastwicklung erfolgt mit Rücksicht auf den variablen, lastabhängigen Kompensationsstrom grundsätzlich in der Weise, dass die Spannung an der Lastwicklung und der diese durchfliessende Strom gemessen und aus den gemessene Werten der Quotient ermittelt wird. Dabei kann die Quotientermittlung mit rein analogen Schaltungsmitteln, mit analogen und digitalen Mitteln in Kombination oder durch digitale Berechnung vorgenommen werden. Einige Beispiele dafür zeigen die Fig. 3 bis 5.

Gemäss der Schaltungsanordnung nach Fig. 3 wird die Spannung u an der den Widerstand $R_L$ aufweisenden, vom Kompensationsstrom $i_L$ durchflossenen Lastwicklung abgegriffen. An einem ebenfalls vom Kompensationsstrom durchflossenen Referenzwiderstand $R_0$ mit konstantem Widerstandswert fällt eine dem Strom $i_L$ proportionale Spannung $u_i$ an. Die beiden Spannungen u und $u_i$ werden einer analogen Dividierschaltung 10 zugeführt, deren Ausgangssignal $u_T$ den Quotienten $u/u_i$ und damit ein Mass für den Widerstand $R_L$ bzw. für die Spulentemperatur darstellt. Um einerseits die Gewichtsmessung nicht zu beeinflussen und andererseits eine hohe Genauigkeit der Widerstandsmessung zu erzielen, müssen die Eingangswiderstände der Dividierschaltung 10 möglichst hoch sein ($R_i \rightarrow \infty$ bzw $R_0$).

Soll der Temperaturwert in digitaler Form vorliegen, so eignet sich für die Widerstandsmessung beispielsweise ein dividierender A/D-Wandler 11 nach Fig. 4. Da der Temperaturkoeffizient des Widerstandes $R_L$ der Lastwicklung im Falle von Kupfer als Wicklungsmaterial mit etwa 4 Promille pro Grad nicht allzu gross ist, muss der A/D-Wandler eine entsprechend hohe Auflösung besitzen. Diese Forderung ist erfüllbar mit einem Mehrfachrampen-Pulsbreitenwandler 12. Dem Signaleingang des Wandlers 12 wird ein der Spannung u am Widerstand $R_L$ der Lastwicklung proportionaler Strom zugeführt, der mit einem Spannung/Strom-Konverter 13 gewonnen wird, während über den Referenzeingang des Wandlers 12 ein dem Kompensationsstrom $i_L$ proportionaler Strom $i_0$ fliesst, der einem sogenannten Stromspiegel 14 entnommen wird. Es ist auch möglich, den Kompensationsstrom $i_L$ direkt in den Wandler 12 einzuspeisen. Das am Ausgang des Wandlers 12 anfallende digitale Signal Z stellt den Quotienten aus u und $i_L$ dar.

Bei der Schaltanordnung nach Fig. 5 ist für die Erfassung des Spannungswertes u und des Stromwertes $i_L$ je ein A/D-Wandler 15 bzw. 16 vorgesehen, deren Ausgangssignale einer digitalen Dividierschaltung 17 zugeführt werden, welche ein dem Quotienten aus u und $i_L$ proportionales Signal Z abgibt. Der A/D-Wandler 16 kann entfallen, wenn der Kompensationsstrom $i_L$ bereits in digitaler Form vorliegt, wie das bei elektromagnetisch kraftkompensierenden Waagen oft der Fall ist.

## Patentansprüche

1. Elektromagnetisch kraftkompensierende Waage, mit einer im Luftspalt eines Permanentmagnetsystems angeordneten Spule, die wenigstens eine von einem lastabhängigen Kompensationsstrom durchflossene Lastwicklung aufweist, und mit einem Temperaturfühler zur Messung der Spulentemperatur als Steuergrösse für die Kompensation ihres Einflusses auf die Messanzeige, dadurch gekennzeichnet, dass eine Wicklung (7;8) der Spule (2) als Temperaturfühler dient und mit einer Einrichtung (10;11, 14;15, 16, 17;9) zur Messung ihres temperaturabhängigen Widerstandes ($R_L$;$R_Z$) aus Spannung (u;$\hat{U}$) und Strom ($i_L$;$\hat{I}$) verbunden ist.

2. Waage nach Anspruch 1, dadurch gekennzeichnet, dass die vom Kompensationsstrom ($i_L$) durchflossene Lastwicklung (7) zugleich als Temperaturfühler dient.

3. Waage nach Anspruch 2, dadurch gekennzeichnet, dass die Lastwicklung (7) mit einer analogen Dividierschaltung (10) verbunden ist, der ein der Spannung (u) an der Lastwicklung und ein dem Strom ($i_L$) in der Lastwicklung proportionales Signal zugeführt wird.

4. Waage nach Anspruch 2, dadurch gekennzeichnet, dass die Lastwicklung (7) mit einem dividierenden A/D-Wandler (11) verbunden ist, dessen Signaleingang ein der Spannung (u) an der Lastwicklung proportionales Signal und dessen Referenzeingang ein dem Strom ($i_L$) in der Lastwicklung proportionales Signal ($i_o$) zugeführt wird.

5. Waage nach Anspruch 4, dadurch gekennzeichnet, dass der A/D-Wandler ein Mehrfachrampen-Pulsbreitenwandler (17) ist.

6. Waage nach Anspruch 2, dadurch gekennzeichnet, dass für die Erfassung des Spannungs- und des Stromwertes (u, $i_L$) je ein A/D-Wandler (15, 16) vorgesehen ist, deren Ausgangssignale einem digitalen Dividierer (17) zugeführt werden.

7. Waage nach Anspruch 1, dadurch gekennzeichnet, dass die Spule (2) eine als Temperaturfühler dienende Zusatzwicklung (8) aufweist, welche mit der Lastwicklung (7) unmittelbar in thermischem Kontakt steht.

8. Waage nach Anspruch 7, dadurch gekennzeichnet, dass die Zusatzwicklung (8) eine Bifilarwicklung oder eine unifilare oder bifilare Mäanderwicklung (19, 22) ist.

9. Waage nach Anspruch 7, dadurch gekennzeichnet, dass die Einrichtung zur Messung des Widerstandes ($R_Z$) der Zusatzwicklung (8) eine Wechselstromquelle (9) aufweist.

## Claims

1. A weighing machine with electromagnetic force compensation, comprising a coil which is arranged in the air gap of a permanent magnet system and which has at least one load winding through which flows a load-dependent compensation current, and a temperature sensor for measuring the coil temperature as a control parameter for copensating for the influence thereof on the measurement display, characterised in that a winding (7; 8) of the coil (2) serves as a temperature sensor and is connected to a means (10; 11, 14; 15, 16, 17; 9) for measuring its temperature-dependent resistance ($R_L$;$R_Z$) from voltage (u; $\hat{U}$) and current ($i_L$; $\hat{I}$).

2. A weighing machine according to claim 1 characterised in that the load winding (7) through which the compensation current ($i_L$) flows serves at the same time as the temperature sensor.

3. A weighing machine according to claim 2 characterised in that the load winding (7) is connected to an analog dividing circuit (10) which is supplied with a signal which is proportional to the voltage (u) at the load winding and a signal which is proportional to the current ($i_L$) in the load winding.

4. A weighing machine according to claim 2 characterised in that the load winding (7) is connected to a dividing A/D-converter (11), the signal input of which receives a signal which is proportional to the voltage (u) at the load winding and the reference input of which receives a signal ($i_o$) which is proportional to the current ($i_L$) in the load winding.

5. A weighing machine according to claim 4 characterised in that the A/D-converter is a multi-ramp pulse width converter (17).

6. A weighing machine according to claim 2 characterised in that a respective A/D-converter (15, 16) is provided for detection of the voltage and current values (u, $i_L$) the output signals of the converters being applied to a digital divider (17).

7. A weighing machine according to claim 1 characterised in that the coil (2) has an additional winding (8) which serves as a temperature sensor and which is directly in thermal contact with the load winding (7).

8. A weighing machine according to claim 7 characterised in that the additional winding (8) is a bifilar winding or a unifilar or bifilar meander winding (19, 22).

9. A weighing machine according to claim 7 characterised in that the means for measuring the resistance ($R_Z$) of the additional winding (8) comprises an alternating current source (9).

## Revendications

1. Balance compensant électromagnétiquement les forces, qui comporte une bobine disposée dans l'entrefer d'un système à aimant permanent et dotée d'au moins un bobinage de charge parcouru par un courant de compensation dépendant de la charge, et qui comporte une sonde de température destinée à mesurer la température de la bobine, l'utilisant comme une grandeur de commande pour la compensation de l'influence de la température sur l'affichage de la mesure, caractérisée par le fait qu'un bobinage (7; 8) de la bobine (2) sert de sonde de température et est relié à un dispositif (10; 11, 14; 15, 16, 17;

19) destiné à mesurer la résistance ($R_L$; $R_Z$) dépendante de la température, dérivée des valeurs de la tension (u; Û) et du courant ($i_L$; Î).

2. Balance selon la revendication 1, caractérisée par le fait que le bobinage de charge (7) parcouru par le courant ($i_L$) sert en même temps de sonde de température.

3. Balance selon la revendication 2, caractérisée par le fait que le bobinage de charge (7) est relié à un dispositif diviseur analogique (10) qui reçoit un signal proportionnel à la tension (u) relevée au niveau du bobinage de charge et au courant ($i_L$) parcourant le bobinage de charge.

4. Balance selon la revendication 2, caractérisée par le fait que le bobinage de charge (7) est relié à un convertisseur diviseur analogique-numérique (11) dont la borne d'entrée des signaux reçoit un signal proportionnel à la tension (u) au niveau du bobinage de charge, et dont la borne d'entrée de référence reçoit un signal ($i_0$) proportionnel au courant ($i_L$) du bobinage de charge.

5. Balance selon la revendication 4, caractérisée par le fait que le convertisseur analogique-numérique est un convertisseur (17) à paliers multiples analysant les durées d'impulsion.

6. Balance selon la revendication 2, caractérisée par le fait qu'un convertisseur analogique-numérique (15, 16) est prévu respectivement pour saisir les valeurs de la tension et du courant (u, $i_L$), et dont les signaux de sortie sont amenés à un dispositif diviseur numérique (17).

7. Balance selon la revendication 1, caractérisée par le fait que la bobine (2) comporte un bobinage auxiliaire (8) servant de sonde de température, se trouvant en contact thermique direct avec le bobinage de charge (7).

8. Balance selon la revendication 7, caractérisée par le fait que le bobinage auxiliaire (8) est réalisé sous forme d'un bobinage bifilaire ou d'un bobinage en méandre monofilaire ou bifilaire (19, 22).

9. Balance selon la revendication 7, caractérisée par le fait que le dispositif destiné à mesurer la résistance ($R_Z$) du bobinage auxiliaire (8) comporte une source (9) de courant alternatif.

FIG. 1

FIG. 2

FIG. 7

FIG. 8

FIG.3

FIG.4

$R_L$ $\downarrow u$

15

A $R_i \to \infty$ D

$i_L$

16

A D

17

Digitale Dividier-schaltung

$Z \sim \dfrac{u}{i_L}$

# FIG. 5

$\hat{I}$=konst.

$R_Z$ 9 ~ $\hat{U} \sim R_Z$

# FIG. 6